# EUROPÄISCHE PATENTSCHRIFT

(11) **EP 1 704 068 B1**
(45) Veröffentlichungstag und Bekanntmachung des Hinweises auf die Patenterteilung: **01.10.2008**
(21) Anmeldenummer: 04802773.4
(22) Anmeldetag: 16.11.2004
(51) Int. Cl.: B60N 2/06

(54) **VORRICHTUNG ZUR FÜHRUNG ZWEI ZUEINANDER VERSTELLBARER BAUGRUPPEN EINES KRAFTFAHRZEUGS, INSBESONDERE EINES KRAFTFAHRZEUGSITZES, ENTLANG EINER FÜHRUNGSRICHTUNG**
DEVICE FOR GUIDING TWO SUB-ASSEMBLIES OF A MOTOR VEHICLE THAT ARE DISPLACEABLE IN RELATION TO ONE ANOTHER, IN PARTICULAR OF A MOTOR VEHICLE SEAT, IN A GUIDE DIRECTION
DISPOSITIF POUR GUIDER DEUX ENSEMBLES DEPLACABLES L'UN PAR RAPPORT A L'AUTRE D'UN VEHICULE AUTOMOBILE, NOTAMMENT D'UN SIEGE DE VEHICULE AUTOMOBILE, LE LONG D'UN SENS DE GUIDAGE

(30) Priorität: 28.11.2003 DE 20318799 U; 10.02.2004 DE 102004007252
(43) Veröffentlichungstag der Anmeldung: 27.09.2006
(73) Patentinhaber: Brose Fahrzeugteile GmbH & Co. KG, Coburg, 96450 Coburg (DE)
(72) Erfinder: SCHRIMPL, Bernhard, 96450 Coburg (DE); SCHMID, Andreas, 96450 Coburg (DE); SCHWARZ, Martin, 45659 Recklinghausen (DE); FLETZBERGER, Günther, 96476 Bad Rodach (DE)
(74) Vertreter: Baumgärtel, Gunnar
(86) Internationale Anmeldenummer: PCT/DE2004/002560
(87) Internationale Veröffentlichungsnummer: WO 2005/051701

(56) Entgegenhaltungen:
- EP-A- 0 779 174
- EP-A- 0 813 990
- DE-A1- 4 416 283
- DE-C1- 10 113 153

## Beschreibung

Die Erfindung betrifft eine Vorrichtung zur Führung zwei zueinander verstellbarer Baugruppen eines Kraftfahrzeugs, insbesondere eines Kraftfahrzeugsitzes, entlang einer Führungsrichtung nach dem Oberbegriff des Anspruchs 1.

Eine derartige Vorrichtung umfasst zwei Führungselemente, die senkrecht zu der Führungsrichtung voneinander beabstandet und gegebenenfalls mittels eines Verbindungselementes miteinander gekoppelt sind, sowie zwei Führungseinrichtungen, in denen jeweils eines der Führungselemente entlang der Führungsrichtung beweglich gelagert ist und die ebenfalls mittels eines Verbindungselementes miteinander gekoppelt sein können, wobei den Führungselementen an den Führungseinrichtungen Anschläge zugeordnet sind, die eine Bewegung der Führungselemente senkrecht zur Führungsrichtung (und in Führungsrichtung) begrenzen. Die beiden Führungselemente einerseits und die zugeordneten Führungseiririchtungen andererseits sind dabei jeweils einer der beiden zueinander verstellbaren Baugruppen zugeordnet.

Eine solche Vorrichtung dient dazu, um zwei zueinander verstellbare Baugruppen eines Kraftfahrzeugs, insbesondere eines Kraftfahrzeugsitzes, die unter der Wirkung einer äußeren, manuell oder fremdkraftbetätigt (z. B. motorisch) aufgebrachten, Verstellkraft relativ zueinander bewegbar sind, entlang einer definierten Richtung zu führen. Hierbei kann es sich sowohl um eine Längsbewegung entlang einer geraden oder einer gekrümmten Linie als auch um eine Schwenkbewegung handeln.

Eine solch Vorrichtung ist aus DE 10 113 153 bekannt.

Das Verbindungselement, über das die beiden Führungselemente miteinander gekoppelt sind, muss nicht notwendig senkrecht zu der Führungsrichtung verlaufen; jedoch weisen die beiden Führungselemente entlang einer senkrecht zur Führungsrichtung verlaufenden Achse einen Abstand auf, der durch das Verbindungselement überbrückt wird. Das Verbindungselement kann insbesondere zur starren Kopplung der beiden Führungselemente dienen und beispielsweise durch ein starres oder teilelastisches Element des Sitzgestells eines Kraftfahrzeugsitzes gebildet werden.

Bei dem Verbindungselement kann es sich einerseits um ein Verbindungselement handeln, das der unmittelbaren Verbindung der beiden Führungselemente oder der beiden Führungseinrichtungen dient, wie z. B. ein Querrohr eines Fahrzeugsitzes. Andererseits können die beiden Führungselemente und/oder die beiden Führungseinrichtungen auch jeweils indirekt miteinander gekoppelt sein, z. B. indem die beiden entsprechenden Baugruppen an jeweils einem äußeren Seitenteil eines Sitzuntergestells angeordnet sind, wobei die beiden Seitenteile wiederum über weitere Bauelemente des Sitzuntergestells miteinander in Verbindung stehen.

Es ist bekannt, zwei im Wesentlichen starr miteinander verbundene Gleit- oder Drehgelenke, die in je einem Basisteil einer Sitzstruktur, wie z. B. einem Sitzseitenteil, an den beiden Längsseiten einer Sitzwanne (an einander gegenüberliegenden Seiten eines Kraftfahrzeugsitzes) gelagert sind, mit Mitteln zum Ausgleich von Montage- und Fertigungstoleranzen auszustatten. Hierdurch sollen auch Geräusche, insbesondere Klappergeräusche, vermieden werden.

Als Mittel werden Toleranzausgleich sind Federelemente verwendet, die in die aus Kunststoff bestehende Gleit- oder Drehgelenke integriert und in mindestens einer Ausgleichsrichtung wirksam sind. Die auszugleichenden Toleranzen können dabei, insbesondere im Fall von Gleitführungen, durchaus im Bereich von einigen Millimetern liegen, da auch Fluchtungsfehler auszugleichen sind. Es hat sich jedoch gezeigt, dass bei schlagartiger Belastung derartiger Gleit- oder Drehgelenke, z. B. in Folge des Überfahrens von Unebenheiten einer Fahrbahn oder bei einem plötzlichen Richtungswechsel oder bei starkem Bremsen eines Fahrzeugs, senkrecht zur Führungsrichtung wirkende Querkräfte auftreten können, die zu einem plötzlichen Komprimieren der Federelemente führen. Die dabei aufeinandertreffenden Anschlagflächen der Führungselemente (in Form von Gleit- oder Drehgelenken) einerseits und der zugeordneten Führungseinrichtungen andererseits verursachen Geräusche, die von Fahrzeuginsassen als störend empfunden werden können.

Ferner können durch die Federelemente Ausgleichsbewegungen der zueinander verstellbaren Baugruppen des Kraftfahrzeugsitzes ermöglicht werden, die von einem jeweiligen Sitzbenutzer als unkomfortabel empfunden werden.

Der Erfindung liegt daher das Problem zugrunde, eine Vorrichtung zur Führung zweier zueinander verstellbarer Baugruppen eines Kraftfahrzeugs, insbesondere eines Kraftfahrzeugsitzes, entlang einer Führungsrichtung weiter zu verbessern.

Dieses Problem wird erfindungsgemäß durch die Schaffung einer Vorrichtung mit den Merkmalen des Anspruchs 1 gelöst.

Danach ist ein erstes der beiden Führungselemente in der zugeordneten Führungseinrichtung mit einem so geringen Bewegungsspielraum bzw. so wenig Lagerluft senkrecht zur Führungsrichtung gelagert, dass in der Führungseinrichtung eine im Wesentlichen klapperfreie Bewegung des Führungselementes entlang der Führungsrichtung ermöglicht wird und gleichzeitig eine substantielle (subjektiv spürbare) Bewegung des Führungselementes senkrecht zur Führungsrichtung verhindert wird. Das zweite Führungselement ist demgegenüber mit größerem Bewegungsspielraum senkrecht zur Führungsrichtung in der zugeordneten Führungseinrichtung gelagert. Dabei wirken beide Führungselemente mit der jeweils zugeordneten Führungseinrichtung senkrecht zur Führungsrichtung über elastische Mittel zusammen, wobei sich das entsprechende Führungselement über die elastischen Mittel an der zugeordneten Führungseinrichtung abstützen kann. Das jeweilige Führungselement kann dann beim Auftreten von Querkräften mit der zugeordneten Führungseinrichtung über die entsprechenden elastischen Mittel senkrecht zur Führungsrichtung in Eingriff treten, indem diese auf Block deformiert (insbesondere komprimiert) werden. Dabei weisen die elastischen Mittel, die zwischen dem ersten Führungselement und der zugeordneten Führungseinrichtung wirken, eine größere Steifigkeit und/oder einen kleineren maximalen Federweg auf, als die elastischen Mittel, die jeweils zwischen dem zweiten Führungselement und der zugeordneten Führungseinrichtung wirken. Hierdurch wird erreicht, dass die dem ersten Führungselement zugeordneten elastischen Mittel (mit größerer Steifigkeit bzw. kleinerem maximalen Federweg) unter einer vorgebbaren Belastung in Federrichtung (Toleranzausgleichsrichtung senkrecht zur Führungsrichtung) eine Deformation der dem zweiten Führungselement zugeordneten elastischen Mittel bis auf Block verhindern. Die vorgebbare Belastung repräsentiert dabei solche Belastungen, die beim Normalgebrauch eines Kraftfahrzeugs, z. B. beim Befahren unebener Strecken, auftreten, und zwar unter Berücksichtigung von Fertigungs- und Montagetoleranzen.

Der durch das erste der beiden Führungselemente und die zugeordnete Führungseinrichtung gebildete Lagerbereich bildet demnach im Wesentlichen ein Festlager, das zwar noch hinreichend viel Lagerluft aufweist, um eine reibungsarme Bewegung des entsprechenden Führungselementes relativ zu der zugeordneten Führungseinrichtung in Führungsrichtung zuzulassen, dass jedoch gleichzeitig keine substantielle (subjektiv spürbare) Bewegung des Führungselementes relativ zu der Führungseinrichtung senkrecht zur Führungseinrichtung ermöglicht und hierdurch Klappergeräusche verhindert. Das andere, zweite Führungselement ist demgegenüber nach Art eines Loslagers mit soviel Bewegungsspielraum senkrecht zur Führungsrichtung in der zugeordneten Führungseinrichtung gelagert, dass unter der Wirkung von Querkräften senkrecht zur Führungsrichtung das erste Führungselement mit einem Anschlag der zugeordneten Führungseinrichtung in Eingriff treten kann, ohne dass das zweite Führungselement mit einem Anschlag der ihm zugeordneten Führungseinrichtung in Eingriff tritt. Dies gilt bei Belastungen, die im Normalbetrieb eines Kraftfahrzeugs beim Befahren unebener Strecken oder dergleichen auftreten. Wenn jedoch in Folge eines Unfalls so große Querkräfte in Form von Crash-Kräften auftreten, dass das erste Führungselement und/oder die zugeordnete Führungseinrichtung beschädigt oder gar zerstört wird, dann können ausnahmsweise als zusätzliche Crash-Sicherung auch das zweite Führungselement und die zugeordnete Führungseinrichtung miteinander in Eingriff treten.

Der unterschiedliche Bewegungsspielraum zwischen dem ersten Führungselement und der zugeordneten Führungseinrichtung einerseits und dem zweiten Führungselement und der zugeordneten Führungseinrichtung andererseits kann gemäß einer Ausführungsform der Erfindung dadurch erreicht werden, dass das erste Führungselement mit geringerem Spiel senkrecht zur Führungsrichtung in der zugeordneten Führungseinrichtung gelagert ist als das zweite Führungselement. Alternativ oder ergänzend kann in einer weiteren Ausführungsform vorgesehen sein, dass das erste Führungselement (unter Verwendung geeigneter elastischer Mittel) mit einer geringeren Elastizität senkrecht zur Führungsrichtung in der zugeordneten Führungseinrichtung lagert als das zweite Führungselement.

Die jeweilige Führungseinrichtung kann einerseits eine Längsführung bilden, so dass die zugeordneten Führungselemente als Gleiter ausgestaltet sind und die beiden miteinander gekoppelten Führungselemente ein Gleitführungselementenpaar bilden, das in den zugeordneten Führungseinrichtungen, z. B. in Form je einer Führungskulisse, gleitend gelagert ist.

Nach einer anderen Ausführungsform der Erfindung ist die jeweilige Führungseinrichtung als Schwenkführung ausgestaltet, so dass die beiden Führungselemente ein Schwenkelementenpaar bilden, dessen Elemente in je eine zugeordnete Führungseinrichtung zur Bildung eines Schwenklagers eingreifen.

Die elastischen Mittel können einerseits einstückig an dem jeweiligen Führungselement in Form eines Gleitführungs- oder Schwenkelementes angeformt sein, also einen integralen Bestandteil des jeweiligen Führungselementes bilden. In diesem Fall bestehen sie vorzugsweise aus einem Kunststoff, insbesondere einem Elastomer, und können als Federzungen, Federösen oder dergleichen ausgebildet sein.

Gemäß einer anderen Ausführungsform der Erfindung werden die federelastischen Mittel durch separate Federelemente gebildet, die sich einerseits an dem jeweiligen Führungselement und andererseits an der jeweils zugeordneten Führungseinrichtung abstützen.

Diejenigen federelastischen Mittel, die dem ersten Führungselement und der entsprechenden Führungseinrichtung zugeordnet sind, weisen gemäß einer vorteilhaften Weiterbildung der Erfindung Anschläge, insbesondere in Form von Gleitfüßen, auf, die bezüglich der äußeren Kontur der federelastischen Mittel etwas zurückgesetzt sind, so dass sie bei einer gewissen Deformation (Komprimierung) der elastischen Mittel mit einer Anschlagfläche der zugeordneten Führungseinrichtung in Eingriff treten können.

Die Führungselemente sind bevorzugt zweiteilig ausgebildet und durch eine Öffnung der zugeordneten Führungseinrichtung hindurch zusammensetzbar und, z. B. durch Rast- oder Clipselemente, miteinander verbindbar. Bevorzugt erfolgt zusätzlich zu der Rast- oder Clipsverbindung eine Verbindung der beiden Teile eines jeden Führungselementes mittels eines zusätzlichen Befestigungselementes, wie z. B. eines Gewindebolzens, mit dem die Führungselemente zugleich mit der zugeordneten Sitzbaugruppe, wie z. B. einem Sitzseitenteil, verbunden werden. Hierbei können die beiden Teile des ersten Führungselementes derart gegeneinander verspannt werden, dass der Federweg der zugeordneten elastischen Mittel nahezu vollständig ausgeschöpft ist und das entsprechende Führungselement im Wesentlichen spielfrei in der zugeordneten Führungseinrichtung lagert.

Die dem ersten Führungselement und der entsprechenden Führungseinrichtung zugeordneten elastischen Mittel, die sich durch vergleichsweise große Steifigkeit und geringen Federweg auszeichnen, können auch durch einen im Wesentlichen massiven Bestandteil eines aus Kunststoff (insbesondere einem Elastomer) bestehenden Führungselementes gebildet werden, wobei die Elastizität auf dem verwendeten Material beruht.

Ein Sitzgestell bzw. ein Kraftfahrzeugsitz mit einer erfindungsgemäßen Vorrichtung zur Führung zweier zueinander verstellbarer Sitzbaugruppen ist durch die Merkmale der Ansprüche 21 bzw. 22 gekennzeichnet.

Weitere Merkmale und Vorteile der Erfindung werden bei der nachfolgenden Beschreibung von Ausführungsbeispielen anhand der Figuren deutlich werden.

Es zeigen:
- Fig. 1: eine schematische Darstellung zweier über ein Verbindungselement im Wesentlichen starr miteinander gekoppelter Führungselemente einer Vorrichtung zur Führung zwei zueinander verstellbarer Baugruppen eines Kraftfahrzeugsitzes;
- Fig. 2: eine in Einzelheiten genauere Darstellung einer Anordnung der in Figur 1 schematisch gezeigten Art;
- Fig. 3a: eine Detaildarstellung eines der Führungselemente aus den Figuren 1 und 2;
- Fig. 3b: das Führungselement aus Figur 3a im eingebauten Zustand;
- Fig. 4a: eine Detaildarstellung eines zweiten Führungselementes der in den Figuren 1 und 2 gezeigten Anordnung;
- Fig. 4b: das Führungselement aus Figur 4a im eingebauten Zustand.

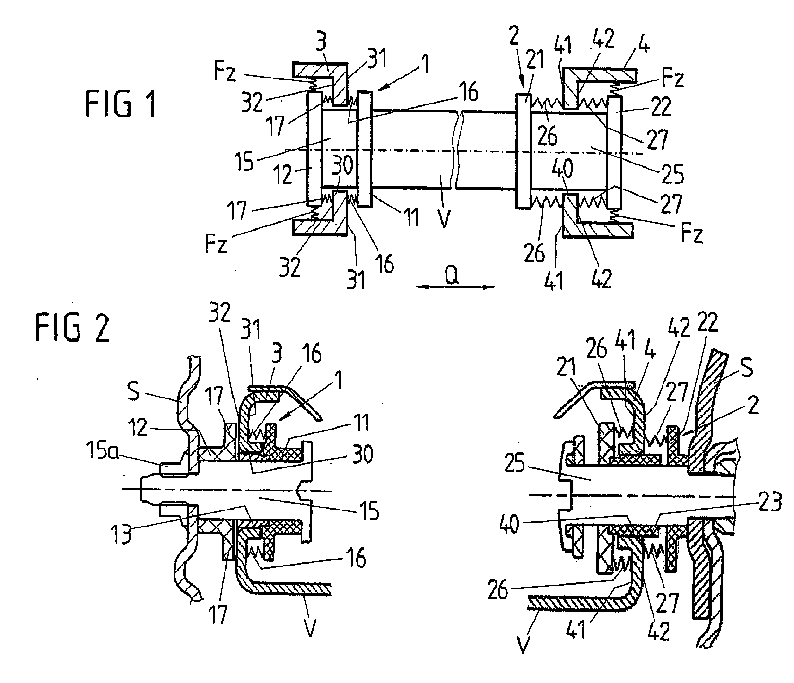

Figur 1 zeigt schematisch zwei Führungselemente 1, 2, bestehend aus jeweils zwei Führungsteilen 11, 12 bzw. 21, 22, die jeweils beidseits einer Führungseinrichtung 3 bzw. 4 angeordnet und durch einen Befestigungsabschnitt 15 bzw. 25 miteinander Verbunden sind. Der entsprechende Befestigungsabschnitt 15 bzw. 25 durchgreift dabei eine Führungsöffnung 30 bzw. 40 in der jeweiligen Führungseinrichtung 3 oder 4.

Die Führungsöffnungen 30, 40 der Führungseinrichtungen 3, 4 können einerseits (geradlinige oder gekrümmte) längserstreckte Führungsbahnen bzw. Führungskulissen bilden, so dass die Führungselemente 1, 2 als Gleitführungselemente senkrecht zur Blattebene gleitend in der jeweiligen Führungseinrichtung 3 oder 4 geführt sind. Die beiden über ein Verbindungselement V im Wesentlichen starr oder teilelastisch (teilweise elastisch) miteinander gekoppelten Führungselemente 1, 2 bilden in diesem Fall ein Gleitführungselementenpaar.

Andererseits können die Führungsöffnungen 30, 40 der Führungseinrichtungen 3, 4 auch jeweils ein Drehlager bilden, so dass die Führungselemente 1, 2 als Schwenkelemente ausgestaltet sind, die sich in dem Drehlager der jeweils zugeordneten Führungseinrichtung 3, 4 verschwenken lassen.

In beiden Fällen wird durch die starre Kopplung der beiden Führungselemente 1, 2 über ein Verbindungselement V, das sich entlang einer Querrichtung Q senkrecht zu der Führungs- bzw. Bewegungsrichtung der Führungselemente 1, 2 in den zugeordneten Führungseinrichtungen 3, 4 erstreckt, erreicht, dass sich die Führungselemente 1, 2 in den zugeordneten Führungseinrichtungen 3, 4 jeweils gemeinsam und in gleichsinnig bewegen.

Die beiden Führungseinrichtungen 3, 4 können dabei dadurch mittelbar (indirekt) miteinander gekoppelt sein, dass sie an den beiden Längsseiten einer einheitlichen Gestellbaugruppe (z.B. einem Sitzträger) eines Kraftfahrzeugsitzes angeordnet sind.

Die beiden Führungselemente 1, 2 stützen sich beidseits der jeweils zugeordneten Führungseinrichtung 3 oder 4 jeweils über elastische Mittel in Form von Federelementen 16, 17 bzw. 26, 27 (hier schematisch repräsentiert durch Druckfedern) an Anschlagsflächen 31, 32 und 41, 42 der jeweiligen Führungseinrichtung 3, 4 ab. Diese Federelemente 16, 17 bzw. 26, 27 dienen dem Toleranzausgleich sowie der Vermeidung von Klappergeräuschen. Die Richtung, entlang der sich das jeweilige Führungselement 1 oder 2 über die entsprechenden Federelemente 16, 17 bzw. 26, 27 beidseitig an der jeweils zugeordneten Führungseinrichtung 3 oder 4 abstützt, entspricht dabei der Erstreckungsrichtung des starren oder zumindest teilweise elastischen Verbindungselementes V und verläuft in Querrichtung Q senkrecht zur Richtung einer möglichen Bewegung der Führungselemente 1, 2 in den zugeordneten Führungseinrichtungen 3, 4 (Führungsrichtung).

Die mit den Bezugsziffern 16, 17; 26, 27 bezeichneten Federlinien symbolisieren dabei jeweils elastisch deformierbare Mittel, die strukturell in beliebiger, geeigneter Form ausgestaltet sein können, etwa als separate Federelemente oder als einstückig an den Führungsteilen 11, 12 bzw. 21, 22 angeformte elastische Bereiche.

Dabei weisen die beiden Federelemente 16, 17 die einem ersten Führungselement 1 der beiden Führungselemente 1, 2 zugeordnet sind, eine größere Federsteifigkeit und einen kleineren maximalen Federweg auf als die Federelemente 26, 27, die dem zweiten Führungselement 2 zugeordnet sind. Ferner ist der Abstand zwischen den beiden Führungsteilen 11, 12 des ersten Führungselementes 1 und den zugeordneten Anschlagflächen 31, 32 der entsprechenden Führungseinrichtung 3, zwischen denen sich die Federelemente 16, 17 abstützen, kleiner als im Fall des zweiten Führungselementes 2 mit den beiden Führungsteilen 21, 22 und den entsprechenden Anschlagflächen 41, 42 der zugeordneten Führungseinrichtung 4, wobei sich dort die Federelemente 26, 27 ebenfalls jeweils zwischen einem der Führungsteile 21, 22 und jeweils einer gegenüberliegenden Anschlagfläche 41, 42 der Führungseinrichtung 4 abstützen.

Bei dem ersten Führungselement 1 sind die beiden Federelemente 16, 17 im montierten Zustand bereits so stark komprimiert, weisen also einen so geringen noch zur Verfügung stehenden maximalen Federweg auf, dass das erste Führungselement 1 und die zugeordnete Führungseinrichtung 3 im Wesentlichen ein Festlager bilden, welches nur geringe Bewegungen des ersten Führungselementes 1 in Querrichtung Q in der zugeordneten Führungsöffnung 30 zulässt. Umgekehrt bilden das zweite Führungselement 2 und die zugeordnete Führungseinrichtung 4 im Wesentlichen ein Loslager, in dem durch Komprimieren der dort in Querrichtung Q wirkenden Federelemente 26, 27 in Form von Druckfedern substantielle, d.h., subjektiv spürbare Bewegungen des entsprechenden Führungselementes 2 entlang der Querrichtung Q möglich wären.

Dies hat zur Folge, dass beim Auftreten von Querkräften, die entlang der Querrichtung Q wirksam sind und z. B. beim Befahren unebener Strecken hervorgerufen werden, eines der beiden zwischen dem ersten Führungselement 1 und den Anschlägen 31, 32 der zugeordneten Führungseinrichtung 3 wirkenden Federelemente 16 oder 17 (je nach Kraftrichtung) bis auf Block komprimiert wird, so dass eines der beiden Führungsteile 11, 12 des ersten Führungselementes 1 über das entsprechende Federelement 16 oder 17 mit der entsprechenden Anschlagsfläche 31 oder 32 der Führungseinrichtung 3 in Eingriff steht. Hierzu ist nur eine geringe zusätzliche Deformation des entsprechenden Federelementes 16 oder 17 erforderlich, da die am ersten Führungselement 1 wirkenden Federelemente ohnehin so stark gegeneinander verspannt sind, dass sie nur eine geringfügige zusätzliche Deformation (entsprechend einem kleinen maximal zur verfügung stehenden Federweg) zulassen.

Da das erste Führungselement 1 und das zweite Führungselement 2 über das Verbindungselement V miteinander gekoppelt sind, bewegen sich die beiden Führungselemente 1, 2 stets gemeinsam sowohl entlang der Führungsrichtung (senkrecht zur Blattebene) als auch entlang der Querrichtung Q. Eine Bewegung des ersten Führungselementes 1, die zu der maximal möglichen Deformation eines der dortigen Federelemente 16, 17 führt, hat hinsichtlich des zweiten Führungselementes 2 eine Bewegung zur Folge, die nur einen Bruchteil des möglichen Federweges der dort in Querrichtung Q wirkenden Federelemente 26, 27 ausschöpft. Somit gerät in der Regel keines der beiden Führungsteile 21, 22 des zweiten Führungselementes 2 unter der Wirkung im Betrieb eines Kraftfahrzeugs auftretender Kräfte in Querrichtung Q über das jeweilige Federelement 26 oder 27 in Eingriff mit der zugeordneten Anschlagsfläche 41 bzw. 42 der zugeordneten Führungseinrichtung 4.

Aufgrund der Lagerung des ersten Führungselementes 1 in der zugeordneten Führungseinrichtung 3 mit minimalem Spiel in Querrichtung Q, werden als unkomfortabel empfundene schlagartige Bewegungen in Querrichtung Q verhindert. Der zwischen dem ersten Führungselement 1 und den Anschlagsflächen 31, 32 der zugeordneten Führungseinrichtung 3 bestehende Bewegungsspielraum (entsprechend der maximal möglichen zusätzlichen Komprimierbarkeit der dortigen Federelemente 16, 17) ist so gewählt, dass eine Relativbewegung des ersten Führungselementes 1 und der zugeordneten Führungseinrichtung 3 nicht durch ein zu sehr in Querrichtung Q verspanntes Lager beeinträchtigt wird, wobei jedoch andererseits nur möglichst geringe Relativbewegungen in Querrichtung Q möglich sein sollen. Das zweite Führungselement 2 tritt im Normalbetrieb eines Kraftfahrzeugs mit den zugeordneten Anschlägen 41, 42 der entsprechenden Führungseinrichtung 4 überhaupt nicht in Eingriff, bietet jedoch zusätzlichen Schutz gegen übermäßige Querbewegungen in einem Crash-Fall. Wenn in einem solchen Fall Kräfte wirken, die zu einer Beschädigung des ersten Führungselementes 1 und/oder der zugeordneten Führungseinrichtung 3 führen, so dass diese eine weitere Querbewegung des ersten Führungselementes 1 relativ zu der zugeordneten Führungseinrichtung 3 nicht verhindern können, dann treten zusätzlich das zweite Führungselement 2 und die entsprechende Führungseinrichtung 4 über das eine Führungsteil 21 und den entsprechenden Anschlag 41 oder das andere Führungsteil 22 und den entsprechenden Anschlag 42 (durch vollständiges Komprimieren eines der dort in Querrichtung wirkenden Federelemente 26 oder 27) miteinander in Eingriff.

Ferner ist erkennbar, dass jedes der Führungselemente 1, 2 sich auch über Federelemente Fz in der jeweiligen Führungseinrichtung 3 oder 4 abstützt, die einen Toleranzausgleich und eine Dämpfung von Stößen senkrecht zu der Querrichtung Q bewirken.

Figur 2 zeigt eine detailliertere Darstellung einer Anordnung aus Figur 1. Gemäß Figur 2 ist sowohl an einem Führungsteil 11 des ersten Führungselementes 1 als auch an einem Führungsteil 21 des zweiten Führungselementes 2 jeweils eine Lagerbuchse 13 bzw. 23 angeordnet, mit der das entsprechende Führungselement 1 oder 2 in die Führungsöffnung 30 bzw. 40 der zugeordneten Führungseinrichtung 3, 4 eingreift.

Dabei sind vorliegend die beiden Führungseinrichtungen 3, 4 über ein Verbindungselement V direkt miteinander gekoppelt, während die beiden Führungselemente 1, 2 durch Befestigung an jeweils einem seitlichen Strukturteil S einer Kraftfahrzeugbaugruppe indirekt miteinander in Verbindung stehen.

Ferner wird deutlich, dass das jeweilige Befestigungselement 15, 25 in Form eines Befestigungsbolzens, über das die beiden Führungsteile 11, 12 und 21, 22 eines jeden Führungselementes 1 bzw. 2 miteinander verbunden sind, das entsprechende Führungselement 1 bzw. 2 auch mit einem Strukturteil S eines Kraftfahrzeugsitzes, wie zum Beispiel einem Sitzseitenteil, verbindet. Hierbei handelt es sich somit um eine der beiden Baugruppen, die mittels der Führungselemente 1, 2 und der zugeordneten Führungseinrichtungen 3, 4 entlang einer Führungsrichtung relativ zueinander verstellbar sind. Die andere der beiden Baugruppen ist dementsprechend mit mindestens einer der Führungseinrichtungen 3, 4 verbunden.

Schließlich ist anhand Figur 2 erkennbar, dass an einem Führungsteil 12 des ersten Führungselementes 1 die elastisch deformierbaren Mittel 17 lediglich durch die Wahl eines hinreichend deformierbaren Materials für den Grundkörper des besagten Führungsteiles 12 zur Verfügung gestellt werden. Es sind dort keine auf Grund ihrer Geometrie elastisch wirkenden Mittel vorgesehen. Dies ist deshalb möglich, weil das erste Führungselement 1 ohnehin nur geringfügige Bewegungen in Querrichtung Q relativ zu der zugeordneten Führungseinrichtung 3 ausführen können soll.

Um eine lagerichtige, definierte Montage der Führungselemente 1, 2 und der jeweils zugeordneten Führungseinrichtungen 3 bzw. 4 sicherzustellen, können die beiden dem ersten bzw. zweiten Führungselement 1, 2 zugeordneten Lagerbuchsen 13, 23 eine unterschiedliche Größe aufweisen, wobei auch die jeweiligen Befestigungselemente 15, 25 hieran angepasst unterschiedliche Gewindegrößen aufweisen.

Im Übrigen stimmt die in Figur 2 gezeigte Anordnung mit der schematisch anhand Figur 1 dargestellten überein, wobei für übereinstimmende Bauelemente jeweils die gleichen Bezugszeichen verwendet wurden. Daher wird zur Vervollständigung der Beschreibung der Figur 2 auf die entsprechenden Ausführungen zu Figur 1 verwiesen.

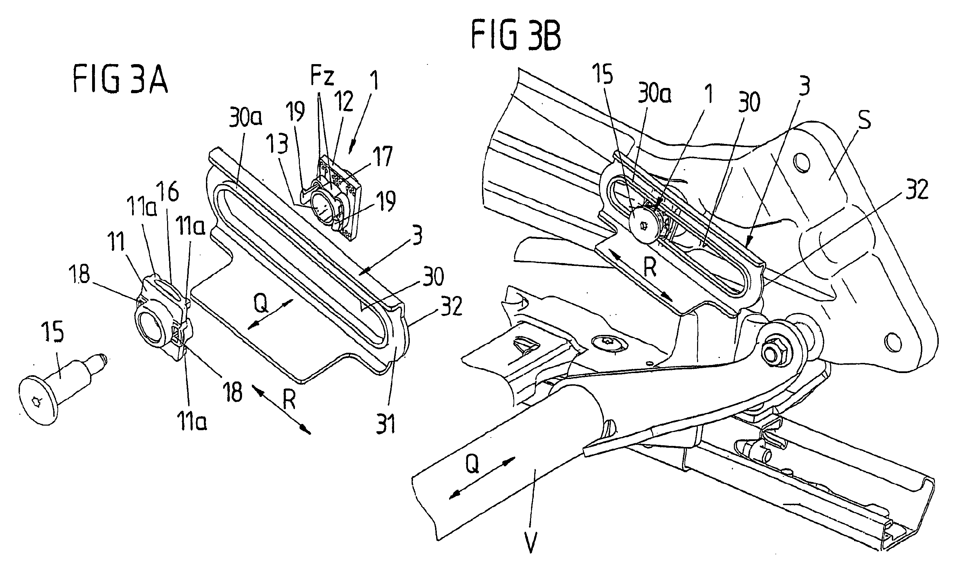

Im Folgenden werden anhand Figur 3a das erste Führungselement 1 und die zugeordnete Führungseinrichtung 3 in einer konkreten Ausführungsform im Einzelnen erläutert werden.

Das erste Führungselement 1 in Form eines Gleitführungselementes besteht demnach aus zwei Gleiterteilen 11, 12 aus Kunststoff, die in Querrichtung Q betrachtet, beidseits einer Führungskulisse 30 der zugeordneten Führungseinrichtung 3 angeordnet und durch eine die Führungskulisse 30 durchgreifende Klipsverbindung 18, 19 miteinander verbunden sind. Diese Klipsverbindung wird gebildet durch Rastöffnungen 18 am einen Gleiterteil 11 und zugeordnete Klipshaken 19 am anderen Gleiterteil 12. Im verbundenen Zustand der beiden Gleiterteile 11, 12 durchgreifen die Klipshaken 19 die Führungskulisse 30 der Führungseinrichtung 3, ebenso wie eine Lagerbuchse 13 des ersten Führungselementes 1, über die das Führungselement längsverschieblich in der Führungskulisse 30 gelagert ist.

Die Klipshaken 19 und die zugeordnete Rastöffnungen 18 an den beiden Gleiterteilen 11, 12 des ersten Führungselementes 1 dienen dabei lediglich zur Vorfixierung der beiden Gleiterteile 11, 12. Die endgültige Fixierung der beiden Gleiterteile 11, 12 aneinander erfolgt mittels eines Schraubbolzens 15, der gemäß Figur 3b mittels einer Mutter 15a an einem Strukturteil S eines Kraftfahrzeugsitzes, nämlich ein Sitzseitenteil befestigt wird und dabei die beiden Gleiterteile 11, 12 des ersten Führungselementes 1 gegeneinander verspannt. Hierbei werden die an dem einen, inneren Gleiterteil 11 einstückig angeformten elastischen Mittel 16 in Form eines elastischen Abschnittes soweit deformiert, dass an diesem Gleiterteil 11 vorgesehene Gleitfüße 11a an einem in Richtung auf das Gleiterteil 11 von der Führungseinrichtung 3 abragenden, die Führungskulisse 30 begrenzenden Vorsprung 30a anliegen und gleichzeitig in Querrichtung Q nur geringfügig von der dem Gleiterteil 11 zugeordneten Anschlagsfläche 31 der Führungseinrichtung 3 beabstandet sind.

Die Gleitfüße 11a sind dabei in Querrichtung Q betrachtet gegenüber dem elastischen Bereich 16 des entsprechenden Gleiterteiles 11 zurückgesetzt, so dass sie mit dem zugeordneten Anschlag 31 der Führungseinrichtung 3 nur dann in Eingriff treten können, wenn die angeformten elastischen Mittel 16 hinreichend deformiert sind. Ein Großteil dieser Deformation erfolgt bereits beim Verspannen der beiden Gleiterteile 11, 12 mittels des Gewindebolzens 15, so dass im montierten Zustand des Führungselementes 1 nur wenig Spiel für eine Bewegung quer zur Führungsrichtung R durch weitere Deformation der besagten elastischen Mittel 16 verbleibt. Das heißt, es steht nur noch ein geringer maximal ausschöpfbarer Federweg zur Verfügung, bis die Gleitfüße 11a mit dem zugeordneten Anschlag 31 der Führungseinrichtung 3 in Eingriff treten.

An dem anderen, äußeren Gleiterteil 12 werden die in Querrichtung Q wirkenden elastischen Mittel 17 (elastischer Abschnitt) durch die Elastizität des für den Grundkörper dieses Gleiterteils 12 verwendeten Materials gebildet. Speziell geformte federelastische Bereiche sind hier nicht vorgesehen. Weiterhin sind im Bereich des Lagerbolzens 13 an dem äußeren Gleiterteil 12 Federmittel Fz angeformt, die als Klapperschutz zu einer Abstützung des Führungselementes 1 an dem Vorsprung 30a der Führungskulisse 30 in einer Richtung senkrecht sowohl zur Führungsrichtung R als auch zur Querrichtung Q dienen.

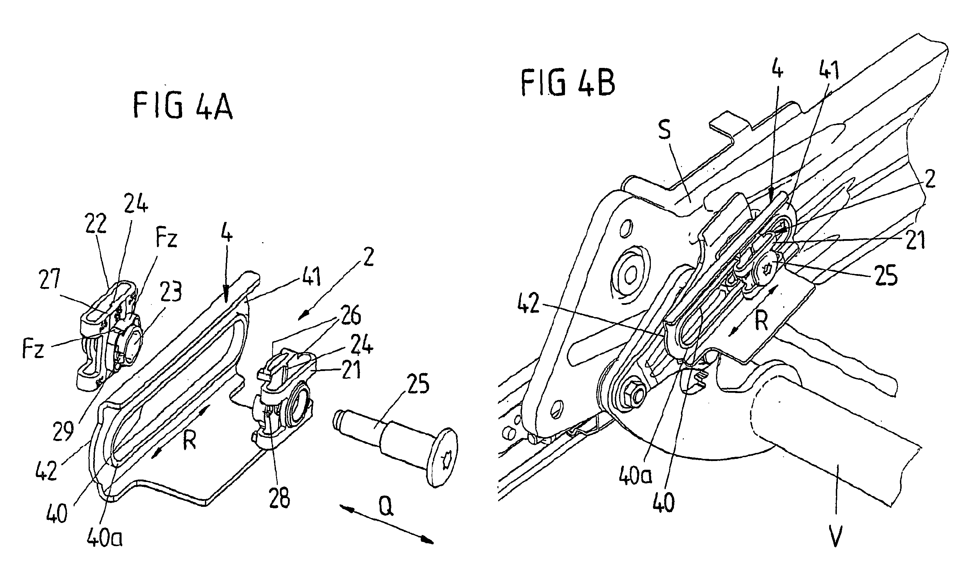

Anhand einer Zusammenschau der Figuren 3b und 4b wird deutlich, dass die starre Kopplung des ersten Führungselementes 1 mit dem anderen Führungselement 2 über ein Verbindungselement V in Form eines Querrohres eines Fahrzeugsitzes erfolgt, das nicht unmittelbar mit den beiden Führungselementen 1, 2 verbunden ist, sondern vielmehr an seinen beiden Enden mit jeweils einem Sitzseitenteil S an einer Längsseite eines Kraftfahrzeugsitzes verbunden ist, wobei an jedem der beiden Sitzseitenteile S eines der Führungselemente 1 bzw. 2 mittels eines Gewindebolzens 15 oder 25 fixiert ist.

An dem entsprechenden Sitzseitenteil S und auf dem dort jeweils fixierten Führungselement 1 oder 2 ist dann je eine der Führungseinrichtungen 3 oder 4 mittels der zugeordneten Führungskulisse 30 bzw. 40 verschieblich gelagert. Die beiden Führungseinrichtungen 3, 4 können beispielsweise mit einem Polsterträger verbunden sein, der zur Aufnahme eines Sitzpolsters des entsprechenden Kraftfahrzeugsitzes dient und der sich entlang der Führungsrichtung R relativ zu den Sitzseitenteilen S verschieben lässt, was einer Einstellbarkeit der Sitzkissentiefe entspricht.

Selbstverständlich kann die entsprechende Führungsanordnung jauch für beliebige andere Verstelleinrichtungen in Kraftfahrzeugsitzen oder an sonstigen Fahrzeugteilen verwendet werden, bei denen zwei quer zur Führungsrichtung der jeweiligen Verstellbewegung voneinander beabstandete Führungselemente (im Wesentlichen starr) miteinander gekoppelt und in jeweils einer Führungseinrichtung (z. B. in Form einer Führungskulisse oder eines Drehlagers) führbar sind.

Figur 4a zeigt schließlich in größerem Detail das zweite Führungselement 2 der Führungsanordnung mit der zugeordneten Führungseinrichtung 4. Auch diese weist eine in Führungsrichtung R erstreckte Führungskulisse 40 mit einem nach innen in Richtung auf ein inneres Gleiterteil 21 des Führungselementes 2 abstehenden, umlaufenden Vorsprung 40a auf.

Das zweite Führungselement 2 in Form eines Gleitführungselementes besteht ebenfalls wiederum aus zwei Gleiterteilen 21, 22, nämlich einem inneren Gleiterteil 21 und einem äußeren Gleiterteil 22, die mittels die Führungskulisse 40 durchgreifende Clipshaken 29 und zugeordnete Rastöffnungen 28 provisorisch miteinander verbindbar sind. Die endgültige Fixierung erfolgt wiederum mittels eines Gewindebolzens 25, der wie im Fall des in Figur 3a dargestellten ersten Führungselementes 1 entsprechende Durchgangsöffnungen in den beiden Gleiterteilen 21, 22 sowie die Führungskulisse 40 durchgreift und der in das Sitzseitenteil S eingeschraubt ist.

Ferner greift auch hier eines der beiden Gleiterteile 21, 22 mit einer Lagerbuchse 23 in die Führungskulisse 40 der Führungseinrichtung 4 ein, wobei im Bereich der Lagerbuchse 23 an dem entsprechenden Gleiterteil 22 senkrecht sowohl zur Führungsrichtung R als auch zur Querrichtung Q wirkende Federelemente Fz als Klapperschutz angeformt sind.

Die in Querrichtung Q wirkenden elastischen Mittel 26, 27 (elastische Abschnitte) der beiden Gleiterteile 21, 22 des zweiten Führungselementes 2 sind so gestaltet, dass sie auch nach einem Verspannen der Gleiterteile 21, 22 mittels des Gewindebolzens 25 noch substantiell weiter deformierbar sind, wobei sich das Führungselement 2 in Querrichtung Q relativ zu der Führungseinrichtung 4 bewegt. Es handelt sich hier um ein Quasi-Loslager.

Die in Querrichtung Q wirkenden federelastischen Mittel 26, 27 des zweiten Führungselementes 2 sind so angeordnet und dimensioniert, dass sie unter der Wirkung von Querkräften entlang besagter Richtung Q in der Regel nicht bis auf Block zusammengedrückt sind, wenn dies bei dem jeweils entsprechenden federelastischen Abschnitt 16 oder 17 des ersten Führungselementes 1 (vergleiche Figuren 3a und 3b) bereits der Fall ist. Die Gleiterteile 21, 22 des zweiten Führungselementes 2 können somit mit den zugeordneten Anschlägen 41, 42 der Führungseinrichtung 4 durch vollständige Deformation der federelastischen Mittel 26, 27 bis auf Block, d. h. bis zum Zusammentreffen der dortigen Querrippen 24 mit den gegenüberliegenden Bereichen des jeweiligen federelastischen Abschnittes, nur dann in Eingriff treten, wenn das erste Führungselement 1 und/oder die zugeordnete Führungseinrichtung 3 so stark beschädigt wurden, dass sie die in Querrichtung Q wirkenden Kräfte nicht vollständig aufnehmen können.

## Patentansprüche

1. Vorrichtung zur Führung zweier zueinander verstellbarer Baugruppen eines Kraftfahrzeugs, insbesondere eines Kraftfahrzeugsitzes, entlang einer Führungsrichtung (R), mit
- zwei Führungselementen (1, 2), die in einer Querrichtung (Q) senkrecht zur Führungsrichtung (R) voneinander beabstandet sind und
- zwei Führungseinrichtungen (3, 4), in denen jeweils eines der Führungselemente (1, 2) entlang der Führungsrichtung (R) beweglich gelagert ist,
wobei die Führungselemente (1, 2) und/oder die Führungseinrichtungen (3, 4) miteinander gekoppelt sind und den Führungselementen (1, 2) an den Führungseinrichtungen (3, 4) Anschläge (31, 32; 41, 42) zugeordnet sind, die eine Bewegung der Führungselemente (1, 2) relativ zu den jeweiligen Führungseinrichtungen (3, 4) entlang der Querrichtung (Q) senkrecht zur Führungsrichtung (R) begrenzen,
**dadurch gekennzeichnet,**
**dass** ein erstes der beiden Führungselemente (1, 2) in der zugeordneten Führungseinrichtung (3) mit einem so geringen Bewegungsspielraum senkrecht zur Führungsrichtung (R) gelagert ist, dass eine Relativbewegung des Führungselementes (1) und der zugeordneten Führungseinrichtung (3) in Führungsrichtung (R) ermöglicht wird und eine substantielle Relativbewegung entlang der Querrichtung (Q) verhindert wird, und dass das zweite Führungselement (2) mit größerem Bewegungsspielraum entlang der Querrichtung (Q) in der zugeordneten Führungseinrichtung (4) gelagert ist, wobei beide Führungselemente (1, 2) mit der jeweils zugeordneten Führungseinrichtung (3, 4) entlang der Querrichtung (Q) über elastische Mittel (16, 17; 26, 27) zusammenwirken und die elastischen Mittel (16, 17), die zwischen dem ersten Führungselement (1) der zugeordneten Führungseinrichtung (3) wirken, eine größere Steifigkeit besitzen als die elastischen Mittel (26, 27), die zwischen dem zweiten Führungselement (2) und der zugeordneten Führungseinrichtung (4) wirken.

2. Vorrichtung nach Anspruch 1, **dadurch gekennzeichnet, dass** der Bewegungsspielraum, mit dem das zweite Führungselement (2) gelagert ist, so groß ist, dass unter der Wirkung von Kräften entlang der Querrichtung (Q) das erste Führungselement (1) mit einem Anschlag (31, 32) der zugeordneten Führungseinrichtung (3) in Eingriff treten kann, ohne dass das zweite Führungselement (2) mit einem Anschlag (41, 42) der zugeordneten Führungseinrichtung (4) in Eingriff tritt.

3. Vorrichtung nach Anspruch 1 oder 2, **dadurch gekennzeichnet, dass** das Lagerspiel entlang der Querrichtung (Q), mit dem das erste Führungselement (1) in der zugeordneten Führungseinrichtung (3) gelagert ist, kleiner ist als das Lagerspiel, mit dem das zweite Führungselement (2) in der zugeordneten Führungseinrichtung (4) gelagert ist.

4. Vorrichtung nach einem der vorhergehenden Ansprüche, **dadurch gekennzeichnet, dass** die Elastizität entlang der Querrichtung (Q), mit der das erste Führungselement (1) in der zugeordneten Führungseinrichtung (3) gelagert ist, geringer ist als die Elastizität, mit der das zweite Führungselement (2) in der zugeordneten Führungseinrichtung (4) gelagert ist.

5. Vorrichtung nach einem der vorhergehenden Ansprüche, **dadurch gekennzeichnet, dass** die Führungseinrichtungen (3, 4) eine Längsführung bilden, an der die Führungselemente (1, 2) als Gleitführungselemente geführt sind.

6. Vorrichtung nach einem der Ansprüche 1 bis 4, **dadurch gekennzeichnet, dass** die Führungseinrichtungen (3, 4) ein Drehlager bilden, in dem die Führungselemente (1, 2) als Schwenkelemente geführt sind.

7. Vorrichtung nach einem der vorhergehenden Ansprüche , **dadurch gekennzeichnet, dass** das jeweilige Führungselement (1, 2) mit der zugeordneten Führungseinrichtung (3, 4) über die elastischen Mittel (16, 17; 26, 27) entlang der Querrichtung (Q) in Eingriff treten kann.

8. Vorrichtung nach einem der vorhergehenden Ansprüche, **dadurch gekennzeichnet, dass** die elastischen Mittel (16, 17), die zwischen dem ersten Führungselement (1) und der zugeordneten Führungseinrichtung (3) wirken, einen geringeren maximal noch zur Verfügung stehenden Federweg in Querrichtung (Q) aufweisen als die elastischen Mittel (26, 27), die zwischen dem zweiten Führungselement (2) und der zugeordneten Führungseinrichtung (4) wirken.

9. Vorrichtung nach einem der vorhergehenden Ansprüche, **dadurch gekennzeichnet, dass** die elastischen Mittel (16, 17), die zwischen dem ersten Federelement (1) und der zugeordneten Führungseinrichtung (3) in Querrichtung (Q) wirken im Vergleich zu den federelastischen Mitteln (26, 27), die zwischen dem zweiten Führungselement (2) und der zugeordneten Führungseinrichtung (4) in Querrichtung (Q) wirken, eine derart größere Steifigkeit und/oder einen derart kleineren maximal noch zur Verfügung stehenden Federweg aufweisen, dass die erstgenannten elastischen Mittel (16, 17) unter einer vorgebbaren Belastung in Querrichtung (Q) ein vollständiges Durchfahren des Federweges der zweitgenannten elastischen Mittel (26, 27) verhindern.

10. Vorrichtung nach Anspruch 9, **dadurch gekennzeichnet, dass** die vorgebbare Belastung, die beim unfallfreien Betrieb eines Kraftfahrzeugs auftretenden Belastungen repräsentiert.

11. Vorrichtung nach einem der vorhergehenden Ansprüche, **dadurch gekennzeichnet, dass** die federelastischen Mittel (16, 17; 26, 27) an dem jeweiligen Führungselement (1, 2) einstückig angeformt sind und vorzugsweise aus einem Kunststoff, insbesondere einem Elastomer, bestehen.

12. Vorrichtung nach einem der Ansprüche 1 bis 10, **dadurch gekennzeichnet, dass** die elastischen Mittel (16, 17; 26, 27) als separate Elemente an dem jeweiligen Führungselement (1, 2) angeordnet sind und sich an diesem abstützen.

13. Vorrichtung nach einem der vorhergehenden Ansprüche, **dadurch gekennzeichnet, dass** die elastischen Mittel (16, 17; 26, 27) durch Federzungen oder Federösen gebildet werden.

14. Vorrichtung nach einem der vorhergehenden Ansprüche, **dadurch gekennzeichnet, dass** an dem ersten Führungselement (1) Anschläge (11a), insbesondere in Form von Gleitfüßen, vorgesehen sind, die in Querrichtung (Q) und bezogen auf die zugeordnete Anschlagsfläche (31) der Führungseinrichtung (3) gegenüber der äußeren Kontur der dortigen elastischen Mittel (16) des ersten Führungselementes (1) zurückgesetzt sind.

15. Vorrichtung nach einem der vorhergehenden Ansprüche, **dadurch gekennzeichnet, dass** die Führungselemente (1, 2) mehrteilig, insbesondere zweiteilig, ausgebildet sind.

16. Vorrichtung nach Anspruch 15, **dadurch gekennzeichnet, dass** die beiden Teile (11, 12; 21, 22) des jeweiligen Führungselementes (1, 2) durch eine Führungsöffnung (30, 40) der jeweils zugeordneten Führungseinrichtung (3, 4) hindurch fügbar und miteinander verbindbar sind.

17. Vorrichtung nach Anspruch 16, **dadurch gekennzeichnet, dass** die Verbindung der beiden Teile (11, 12; 21, 22) des jeweiligen Führungselementes (1, 2) durch Clipselemente (18, 19; 28, 29) und/oder durch einen Gewindebolzen (15, 25) erfolgt.

18. Vorrichtung nach einem der Ansprüche 15 bis 17, **dadurch gekennzeichnet, dass** die beiden Teile (11, 12) des ersten Führungselementes (1) derart gegeneinander verspannt sind, dass kein substantieller Federweg für eine weitere Deformation der an dem entsprechenden Führungselement (1) in Querrichtung (Q) wirkenden elastischen Mittel (16, 17) zur Verfügung steht.

19. Vorrichtung nach einem der Ansprüche 1 bis 10 oder einem der Ansprüche 13 bis 17, **dadurch gekennzeichnet, dass** zumindest ein Teil der elastischen Mittel (17), die am ersten Führungselement (1) in Querrichtung (Q) wirken, durch die Verwendung eines elastischen Materials für das erste Führungselement (1) gebildet werden.

20. Vorrichtung nach einem der vorhergehenden Ansprüche, **dadurch gekennzeichnet, dass** zwischen dem ersten Führungselement (1) und/oder dem zweiten Führungselement (2) einerseits und der jeweils zugeordneten Führungseinrichtung (3, 4) andererseits elastische Mittel in einer Richtung senkrecht sowohl zur Führungsrichtung (R) als auch zur Querrichtung (Q) wirken.

21. Sitzgestell mit einer Vorrichtung zur Führung zweier zueinander verstellbarer Sitzbaugruppen eines Kraftfahrzeugs nach einem der vorhergehenden Ansprüche.

22. Kraftfahrzeugsitz mit einem Sitzgestell nach Anspruch 21.

## Claims

1. Device for guiding two sub assemblies of a motor vehicle which are displaceable relative to one another, more particularly of a motor vehicle seat, along a guide direction (R) with
- two guide elements (1, 2) which are spaced from one another in a transverse direction (Q) perpendicular to the guide direction (R) and
- two guide devices (3, 4) in which each one of the guide elements (1, 2) is mounted movable along the guide direction (R),
wherein the guide elements (1, 2) and/or the guide devices (3, 4) are coupled to one another and stops (31, 32; 41, 42) are associated with the guide elements (1, 2) on the guide devices (3, 4) to restrict movement of the guide elements (1, 2) relative to the relevant guide devices (3, 4) along the transverse direction (Q) perpendicular to the guide direction (R),
**characterised in that**
a first of the two guide elements (1, 2) is mounted in the associated guide device (3) with such small displacement margin perpendicular to the guide direction (R) that a relative movement of the guide element (1) and the associated guide device (3) is possible in the guide direction (R) and a substantial relative movement is prevented along the transverse direction (Q), and that the second guide element (2) is mounted with greater displacement margin along the transverse direction (Q) in the associated guide device (4), wherein the two guide elements (1, 2) each interact with their associated guide device (3, 4) along the transverse direction (Q) through elastic means (16, 17; 26, 27) and the elastic means (16, 17) which act between the first guide element (1) of the associated guide device (3) have a greater stiffness than the elastic means (26, 27) which act between the second guide element (2) and the associated guide device (4).

2. Device according to claim 1, **characterised in that** the displacement margin with which the second guide element (2) is mounted is so great that under the action of forces along the transverse direction (Q) the first guide element (1) can move into engagement with a stop (31, 32) of the associated guide device (3) without the second guide element (2) moving into engagement with a stop (41, 42) of the associated guide device (4).

3. Device according to claim 1 or 2, **characterised in that** the bearing play along the transverse direction (Q) with which the first guide element (1) is mounted in the associated guide device |(3) is smaller than the bearing play with which the second guide element (2) is mounted in the associated guide device (4).

4. Device according to one of the preceding claims, **characterised in that** the elasticity along the transverse direction (Q) with which the first guide element (1) is mounted in the associated guide device (3) is less than the elasticity with which the second guide element (2) is mounted in the associated guide device (4).

5. Device according to one of the preceding claims, **characterised in that** the guide devices (3, 4) form a longitudinal guide on which the guide elements (1, 2) are guided as sliding guide elements.

6. Device according to one of claims 1 to 4, **characterised in that** the guide devices (3, 4) form a rotary bearing in which the guide elements (1, 2) are guided as swivel elements.

7. Device according to one of the preceding claims, **characterised in that** the relevant guide element (1, 2) can move along the transverse direction (Q) into engagement with the associated guide device (3, 4) through the elastic means (16, 17; 26, 27).

8. Device according to one of the preceding claims, **characterised in that** the elastic means (16, 17) which act between the first guide element (1) and the associated guide device (3) have a smaller maximum still available spring path in the transverse direction (Q) than the elastic means (26, 27) which act between the second guide element (2) and the associated guide device (4).

9. Device according to one of the preceding claims, **characterised in that** the elastic means (16, 17) which act between the first spring element (1) and the associated guide device (3) in the transverse direction (Q) have in comparison with the spring elastic means (26, 27) which act between the second guide element (2) and the associated guide device (4) in the transverse direction (Q) such a greater stiffness and/or such a smaller maximum still available spring path that the first-mentioned elastic means (16, 17) under a predeterminable load in the transverse direction (Q) prevent a complete run through of the spring path of the second-mentioned elastic means (26, 27).

10. Device according to claim 9, **characterised in that** the predeterminable load represents the loads which occur during accident-free operation of the motor vehicle.

11. Device according to one of the preceding claims, **characterised in that** the spring elastic means (16, 17; 26, 27) are formed in one piece on the relevant guide element (1, 2) and preferably consist of a plastics, more particularly an elastomer.

12. Device according to one of claims 1 to 10, **characterised in that** the elastic means (16, 17; 26, 27) are mounted as separate elements on the relevant guide element (1, 2) and are supported on this.

13. Device according to one of the preceding claims, **characterised in that** the elastic means (16, 17; 26, 27) are formed by spring tongues or spring eyelets.

14. Device according to one of the preceding claims, **characterised in that** on the first guide element (1) stops (11 a) are provided more particularly in the form of slide feet which in the transverse direction (Q) and in relation to the associated stop face (31) of the guide device (3) are set back from the outer contour of the elastic means (16) there of the first guide element (1).

15. Device according to one of the preceding claims, **characterised in that** the guide elements (1, 2) are designed in several parts, more particularly two parts.

16. Device according to claim 15, **characterised in that** the two parts (11, 12, 21,22) of the relevant guide element (1, 2) are accessible through a guide opening (30, 40) of the relevant guide (3, 4) and can be connected to one another through same.

17. Device according to claim 16, **characterised in that** the connection of the two parts (11, 12; 21, 22) of the relevant guide element (1, 2) is through clip elements (18, 19; 28, 29) and /or through a threaded bolt (15, 25).

18. Device according to one of claims 15 to 17, **characterised in that** the two parts (11, 12) of the first guide element (1) are tensioned towards each other so that no substantial spring path becomes available for further deformation of the elastic means (16, 17) acting in the transverse direction (Q) on the corresponding guide element (1).

19. Device according to one of claims 1 to 10 or one of claims 13 to 17, **characterised in that** at least one part of the elastic means (17) which act in the transverse direction (Q) on the first guide element (1) are formed by the use of an elastic material for the first guide element (1).

20. Device according to one of the preceding claims, **characterised in that** between the first guide element (1) and/or the second guide element (2) on the one hand and each relative guide device (3, 4) on the other elastic means act in a direction both perpendicular to the guide direction (R) and to the transverse direction (Q).

21. Seat frame with a device for guiding two seat sub assemblies of a motor vehicle which are displaceable relative to each other according to one of the preceding claims.

22. Motor vehicle seat with a seat frame according to claim 21.

## Revendications

1. Dispositif servant à guider deux ensembles déplaçables l'un par rapport à l'autre d'un véhicule automobile, notamment d'un siège de véhicule automobile, selon une direction de guidage (R), comprenant
deux éléments de guidage (1, 2) qui sont écartés l'un de l'autre dans une direction transversale (Q) perpendiculairement à la direction de guidage (R) et
deux dispositifs de guidage (3, 4) dans chacun desquels un des éléments de guidage (1, 2) est logé de manière mobile selon la direction de guidage (R),
les éléments de guidage (1, 2) et/ou les dispositifs de guidage (3, 4) étant couplés les uns avec les autres et des butées (31, 32 ; 41, 42) étant affectées aux éléments de guidage (1, 2) sur les dispositifs de guidage (3, 4), butées qui limitent un mouvement des éléments de guidage (1, 2) par rapport aux dispositifs de guidage (3, 4) respectifs selon une direction transversale (Q) perpendiculairement à la direction de guidage (R),
**caractérisé**
**en ce qu'**un premier des deux éléments de guidage (1, 2) est logé dans le dispositif de guidage (3) correspondant avec une plage de déplacement perpendiculairement à la direction de guidage (R) si petite qu'un mouvement relatif de l'élément de guidage (1) et du dispositif de guidage (3) correspondant est possible dans la direction de guidage (R) et qu'un mouvement relatif substantiel est empêché selon la direction transversale (Q), et en ce que le deuxième élément de guidage (2) est logé dans le dispositif de guidage (4) correspondant avec une plus grande plage de déplacement selon la direction transversale (Q), les deux éléments de guidage (1, 2) coopérant avec le dispositif de guidage (3, 4) respectif correspondant selon la direction transversale (Q) par le biais de moyens élastiques (16, 17 ; 26, 27), et les moyens élastiques (16, 17) qui agissent entre le premier élément de guidage (1) le dispositif de guidage (3) correspondant, ont une plus grande rigidité que les moyens élastiques (26, 27) qui agissent entre le deuxième élément de guidage (2) et le dispositif de guidage correspondant (4).

2. Dispositif selon la revendication 1, **caractérisé en ce que** la plage de mouvement, avec laquelle le deuxième élément de guidage (2) est logé, est si grande que, sous l'action de forces exercées selon la direction transversale (Q), le premier élément de guidage (1) peut entrer en prise avec une butée (31, 32) du dispositif de guidage (3) correspondant sans que le deuxième élément de guidage (2) entre en prise avec une butée (41, 42) du dispositif de guidage (4) correspondant.

3. Dispositif selon la revendication 1 ou 2, **caractérisé en ce que** la plage selon la direction transversale (Q), avec laquelle le premier élément de guidage (1) est logé dans le dispositif de guidage (3) correspondant, est plus petite que la plage avec laquelle le deuxième élément de guidage (2) est logé dans le dispositif de guidage (4) correspondant.

4. Dispositif selon l'une des revendications précédentes **caractérisé en ce que** l'élasticité selon la direction transversale (Q) avec laquelle le premier élément de guidage (1) est logé dans le dispositif de guidage (3) correspondant est plus petite que l'élasticité avec laquelle le deuxième élément de guidage (2) est logé dans le dispositif de guidage (4) correspondant.

5. Dispositif selon l'une des revendications précédentes, **caractérisé en ce que** les dispositifs de guidage (3, 4) forment un guidage longitudinal sur lequel sont guidés les éléments de guidage (1, 2) en tant qu'éléments de guidage coulissants.

6. Dispositif selon l'une des revendications 1 à 4, **caractérisé en ce que** les dispositifs de guidage (3, 4) forment un coussinet de pivotement dans lequel sont guidés les éléments de guidage (1, 2) en tant qu'éléments de pivotement.

7. Dispositif selon l'une des revendications précédentes, **caractérisé en ce que** chaque élément de guidage (1, 2) peut entrer en prise avec le dispositif de guidage (3, 4) correspondant par le biais des moyens élastiques (16, 17 ; 26, 27) selon la direction transversale (Q).

8. Dispositif selon l'une des revendications précédentes, **caractérisé en ce que** les moyens élastiques (16, 17) qui agissent entre le premier élément de guidage (1) et le dispositif de guidage (3) correspondant présentent un allongement élastique encore disponible en direction transversale (Q) au maximum moindre que les moyens élastiques (26, 27) qui agissent entre le deuxième élément de guidage (2) et le dispositif de guidage (4) correspondant.

9. Dispositif selon l'une des revendications précédentes, **caractérisé en ce que** les moyens élastiques (16, 17) qui agissent entre le premier élément de ressort (1) et le dispositif de guidage (3) correspondant en direction transversale (Q) agissent comparativement aux moyens élastiques (26, 27) agissant entre le deuxième élément de guidage (2) et le dispositif de guidage (4) correspondant en direction transversale (Q), présentent une plus grande rigidité et/ou un allongement élastique encore disponible au maximum plus petit tels que les moyens élastiques (16, 17) cités en premier sous une charge déterminable en direction transversale empêchent un parcours complet de l'allongement élastique des moyens élastiques cités en deuxième (26, 27).

10. Dispositif selon la revendication 9, **caractérisé en ce que** la charge déterminable qui représente les charges intervenant lors du fonctionnement sans incident d'un véhicule automobile.

11. Dispositif selon l'une des revendications précédentes, **caractérisé en ce que** les moyens élastiques (16, 17 ; 26, 27) sont formés d'une pièce sur chaque élément de guidage (1, 2) et se composent de préférence d'une matière synthétique, notamment d'un élastomère.

12. Dispositif selon l'une des revendications 1 à 10, **caractérisé en ce que** les moyens élastiques (16, 17 ; 26, 27) sont disposés en tant qu'éléments séparés sur chaque élément de guidage (1, 2) et s'appuient contre celui-ci.

13. Dispositif selon l'une des revendications précédentes, **caractérisé en ce que** les moyens élastiques (16, 17 ; 26, 27) sont formés par des lames de ressort ou des oeillets de ressort.

14. Dispositif selon l'une des revendications précédentes, **caractérisé en ce que** sur le premier élément de guidage (1) sont prévues des butées (11a), notamment en forme de pieds coulissants, qui en direction transversale (Q) et par rapport aux surfaces de butée (31) correspondantes du dispositif de guidage (3) sont rappelées contre le contour extérieur du moyen élastique (16) se trouvant là du premier élément de guidage (1).

15. Dispositif selon l'une des revendications précédentes, **caractérisé en ce que** les éléments de guidage (1, 2) sont constitués en plusieurs parties, notamment en deux parties.

16. Dispositif selon la revendication 15, **caractérisé en ce que** les deux parties (11, 12 ; 21, 22) de chaque élément de guidage (1, 2) peuvent être jointes à travers une ouverture de guidage (30, 40) de chaque dispositif de guidage (3, 4) correspondant et peuvent être reliées entre elles.

17. Dispositif selon la revendication 16, **caractérisé en ce que** la liaison des deux parties (11, 12 ; 21, 22) de chaque élément de guidage (1, 2) est effectué par des clips (18, 19 ; 28, 29) et/ou par un boulon fileté (15, 25).

18. Dispositif selon l'une des revendications 15 à 17, **caractérisé en ce que** les deux parties (11, 12) du premier élément de guidage (1) sont déformées l'une par rapport à l'autre de telle manière qu'aucun allongement élastique substantiel pour une déformation ultérieure des moyens élastiques (16, 17) agissant en direction transversale (Q) sur l'élément de guidage correspondant (1) n'est disponible.

19. Dispositif selon l'une des revendications 1 à 10 ou l'une des revendications 13 à 17, **caractérisé en ce qu'**au moins une partie des moyens élastiques (17) qui agissent en direction transversale (Q) sur le premier élément de guidage (1), sont formés par l'utilisation d'un matériau élastique pour le premier élément de guidage (1).

20. Dispositif selon l'une des revendications précédentes, **caractérisé en ce qu'**entre le premier élément de guidage (1) et/ou le deuxième élément de guidage (2) d'une part et le dispositif de guidage (3, 4) respectivement correspondant d'autre part, des moyens élastiques agissent dans une direction perpendiculaire aussi bien à la direction de guidage (R) qu'à la direction transversale (Q).

21. Carcasse de siège avec un dispositif servant à guider deux ensembles de sièges déplaçables l'un par rapport à l'autre d'un véhicule automobile selon l'une des revendications précédentes.

22. Siège de véhicule automobile avec une carcasse de siège selon la revendication 21.
